Europäisches Patentamt

European Patent Office

Office européen des brevets

(11) Veröffentlichungsnummer: **0 271 160**
B1

(12) # EUROPÄISCHE PATENTSCHRIFT

(45) Veröffentlichungstag der Patentschrift:
14.03.90

(21) Anmeldenummer: 87202417.9

(22) Anmeldetag: 04.12.87

(51) Int. Cl.⁴: **C22B 1/20,** C04B 18/02,
B01J 2/00

(54) **Verfahren zur Herstellung von festen Agglomeraten aus stichfesten mineralischen Schlämmen.**

(30) Priorität: 10.12.86 DE 3642172

(43) Veröffentlichungstag der Anmeldung:
15.06.88 Patentblatt 88/24

(45) Bekanntmachung des Hinweises auf die Patenterteilung:
14.03.90 Patentblatt 90/11

(84) Benannte Vertragsstaaten:
BE DE ES FR GB IT NL SE

(56) Entgegenhaltungen:
FR-A- 2 529 577

(73) Patentinhaber: METALLGESELLSCHAFT AG,
Reuterweg 14 Postfach 3724, D-6000 Frankfurt/M.1(DE)

(72) Erfinder: Boss, Karl-Heinz, Vor der Kuppe 5, D-6380 Bad
Homburg v.d.H.(DE)
Erfinder: Cappel, Fred, Dr., Schopenhauerstrasse 13,
D-6072 Dreieich(DE)
Erfinder: Goecke, Axel, Steinbacher Strasse 33,
D-6242 Kronberg 2(DE)
Erfinder: Hankel, Dirk, Dr., Wiesenstrasse 3,
D-6052 Mühlheim 3(DE)

## Beschreibung

Die Erfindung betrifft ein Verfahren zur Herstellung von festen Agglomeraten aus stichfesten mineralischen Schlämmen, die organische Bestandteile bis zu 10 % enthalten, wobei aus den Schlämmen Formlinge hergestellt werden, die Formlinge auf einem Wanderrost in einer thermischen Behandlungszone durch Hindurchleiten von heißen oxidierenden Gasen getrocknet und geklinkert werden, die geklinkerten Formlinge durch Hindurchleiten von kalten Gasen gekühlt werden, und das Abgas des Wanderrostes einer Reinigung unterworfen wird.

Solche Schlämme fallen insbesondere beim Ausbaggern von Häfen oder Flüssen an und werden auch als Schlick bezeichnet. Ihre Trockensubstanz besteht hauptsächlich aus mineralischen Stoffen und bis zu etwa 10 % aus organischen Stoffen, bezogen auf trockene Substanz. Sie enthalten Schwermetalle, wie Blei, Zink, Cadmium, Chrom usw. Ihr Wassergehalt liegt im allgemeinen über 60 %. Durch Entwässern kann der Wassergehalt zwar gesenkt werden, liegt aber immer noch sehr hoch. Diese Schlämme ergeben wegen ihres hohen Wassergehaltes und ihres Gehaltes an Schwermetallen und organischen Bestandteilen beträchtliche Deponie-Probleme.

Es sind deshalb verschiedene Verfahren vorgeschlagen worden, diese Schlämme in ein verwertbares oder gut deponierbares Produkt zu verwandeln.

Aus der US - A - 3 801 262 ist es bekannt, Schlämme mit Flugasche zu mischen, zu granulieren und dann bei Temperaturen von 900 bis 1400°C zu brennen und so ein leichtes Blähmaterial zu erzeugen.

Aus der EP - A - 0 102 092 ist es bekannt, Schlämme mit Flugasche zu mischen, in die gewünschte Form zu gießen, zu pressen oder zu stampfen, zu trocknen und anschließend bei Temperaturen von 850 bis 1250°C zu backen.

Aus der DE - A - 31 50 993 ist es bekannt, Schlämme mit mineralischen Zuschlagstoffen zu mischen, zu granulieren, zu trocknen und dann in einem Drehrohrofen bei 1000 bis 1200°C einer schockartigen Temperaturbehandlung zu unterwerfen. Dadurch soll eine geschlossene Sinterhaut erzeugt werden, welche die Inhaltsstoffe fest einschließt.

Aus der EP - A - 0 168 532 ist es bekannt, Schlämme mit Flugasche zu mischen, zu granulieren, zu trocknen, bei Temperaturen von 300 bis 700°C die organischen Bestandteile zu verbrennen und dann bei Temperaturen von etwa 1100°C zu sintern. Die Temperaturbehandlung erfolgt in einem Drehrohrofen oder einer mehrstufigen Wirbelschicht. Die Abgase werden aus dem kälteren Teil des Ofens abgezogen, in einem Wärmeaustauscher aufgeheizt und dann nachverbrannt. Die Verbrennungsgase werden durch den Wärmeaustauscher geleitet und dann in einer Gasreinigung von Fluor, Chlor und $SO_2$ befreit, wobei auch Staub entfernt wird. Die Gasreinigung erfolgt durch Einblasen von Kalk mit anschließender Abscheidung in Schlauchfiltern.

Aus der DE - A - 35 34 139 ist ein Verfahren bekannt, bei dem stichfeste Schlämme mit einem Wassergehalt von 30 bis 60 % durch Pressen in Formlinge geformt werden, auf einem Wanderrost mit heißen, sauerstoffhaltigen Gasen von 500 bis 900°C behandelt und dabei die organischen Bestandteile verbrannt werden, und anschließend mit heißen, sauerstoffhaltigen Gasen von 1100 bis 1160°C geklinkert werden. Geringe Mengen an verflüchtigten Schwermetallen sollen aus dem Abgas abgeschieden werden.

Aus der DE - A - 36 02 562 ist ein Verfahren bekannt, bei dem stichfeste Schlämme mit einem Wassergehalt von 40 bis 65 % mit trockenem Rückgut so gemischt werden, daß der Wassergehalt 20 bis 30 % beträgt, und daß der Gehalt an organischen Bestandteilen bei der Verbrennung nicht zur Überschreitung der gewünschten Klinkertemperatur führt. Aus der Mischung werden Pellets hergestellt und auf einem Wanderrost zunächst mit heißen, sauerstoffhaltigen Gasen von 500 bis 900°C und dann mit solchen von 1100 bis 1160°C behandelt und dann mit kalten Gasen gekühlt. Die obere geklinkerte Schicht wird von der unteren Schicht getrennt, welche als Rückgut zurückgeleitet wird. Geringe Mengen an Schwermetallen sollen aus dem Abgas abgeschieden werden.

Diese bekannten Verfahren machen entweder keine Ausführungen zu der Abgasreinigung oder leiten das gesamte Abgas durch die Nachverbrennung, wobei die Verbrennungswärme zur Aufheizung der Abgase in einem Wärmetauscher verwendet wird. Dieser Wärmeaustauscher unterliegt einer starken Korrosion durch die HCl und HF enthaltenden Gase an den Austauscherwänden.

Der Erfindung liegt die Aufgabe zugrunde, eine möglichst optimale Reinigung der Abgase in möglichst wirtschaftlicher Weise zu erzielen.

Die Lösung dieser Aufgabe erfolgt erfindungsgemäß dadurch, daß das Abgas aus den ersten 60 bis 85 % der thermischen Behandlungszone des Wanderrostes separat abgezogen und mindestens ein Teilstrom in einer Nachverbrennung bei Temperaturen von 1000 bis 1200°C nachverbrannt wird, der Wärmeinhalt der Gase aus der Nachverbrennung ausgenutzt wird, das Abgas aus den restlichen 40 bis 15 % der thermischen Behandlungszone separat abgezogen und in einen Economizer geleitet wird, und das abgekühlte Abgas durch eine Entschwefelung und Entstaubung geleitet wird.

Die Formlinge können durch Pressen oder Pelletieren hergestellt werden. Die thermische Behandlungszone des Wanderrostes umfaßt die Länge des Obertrums des Wanderrostes über Windkästen, in der heiße Gase durch das Bett der Formlinge gesaugt werden. Sie beginnt mit der Trocknungszone und endet mit der Kalzinierzone. Die Formlinge werden in einer Schichthöhe von etwa 20 bis 30 cm auf den Wanderrost aufgegeben. Die Nachverbrennung der Abgase erfolgt bei Temperaturen zwischen 1000 und 1200°C und bevorzugt zwischen 1050 und 1100°C, wodurch die Bildung von Dioxin vermieden wird. Der Wärmeinhalt der Gase aus der Nachverbrennung kann durch indirekten Wärmeaustausch mit einem anderen Medium erfolgen oder durch Rückleitung der Gase auf den Wanderrost. Die Entschwefelung und Entstaubung des Abgases kann nach bekannten Verfahren erfolgen. Die Temperatur der Beschickung auf dem Wanderrost nach den ersten 60 bis 85 % der thermischen Brennzone soll mindestens 800°C betragen.

Eine vorzugsweise Ausgestaltung besteht darin, daß das Abgas aus den ersten 70 bis 80 % der thermischen Behandlungszone und aus den restlichen 30 bis 20 % separat abgezogen wird. Diese Aufteilung ergibt besonders günstige Ergebnisse.

Eine Ausgestaltung besteht darin, daß ein Teilstrom des Abgases aus dem ersten Teil der thermischen Behandlungszone vor der Nachverbrennung in die thermische Behandlungszone zurückgeleitet wird. Die Rückführung kann in die Trocknungszone oder Vorwärmzone erfolgen, wo die fühlbare Wärme des Gases ausgenutzt wird. Die Rückführung kann auch in den heißen Teil der thermischen Behandlungszone oder in die Brenner erfolgen, wo dann die latente und fühlbare Wärme ausgenutzt wird. Diese Arbeitsweise ergibt als Vorteil eine Ersparnis an Heizmaterial, liefert aber weniger Dampf und benötigt Rückführleitungen.

Eine Ausgestaltung besteht darin, daß ein Teilstrom des Gases nach der Nachverbrennung in die thermische Behandlungszone zurückgeleitet wird. Die Rückführung erfolgt in die ersten 60 bis 85 % der Länge der thermischen Behandlungszone und die Verteilung wird aufgrund der dort erforderlichen Temperaturen vorgenommen. Auch diese Arbeitsweise ergibt eine Ersparnis an Heizmaterial, liefert weniger Dampf und benötigt Rückführleitungen.

Eine Ausgestaltung besteht darin, daß ein Teilstrom des Gases aus dem ersten Teil der thermischen Behandlungszone vor der Nachverbrennung in eine erste Kühlzone auf dem Wanderrost und anschließend in die thermische Behandlungszone geleitet wird. Vorzugsweise wird das Gas in der ersten Kühlzone, die sich an die thermische Behandlungszone anschließt, von unten nach oben durch die Beschickung auf dem Wanderrost geleitet und dann unter einer gemeinsamen Gashaube, welche die Kühlzone und die thermische Behandlungszone überdeckt, in die thermische Behandlungszone geleitet. Beim Durchgang durch die erste Kühlzone wird das Gas aufgeheizt und bringt diese Wärme in die thermische Behandlungszone ein.

Eine vorzugsweise Ausgestaltung besteht darin, daß mindestens ein Teilstrom des Gases aus der Nachverbrennung in einen Abhitzekessel geleitet wird und nach dem Abhitzekessel, mit dem Gas aus dem Economizer vereinigt, durch die Entschwefelung und Entstaubung geleitet wird. Der Abhitzekessel kann mit vorgewärmtem Speisewasser betrieben werden. Im Abhitzekessel wird Dampf erzeugt. Die Abgase werden auf etwa 250 bis 350°C abgekühlt. Dabei wird eine Überschreitung der kritischen Wandtemperatur an den Austauscherflächen mit Sicherheit vermieden und damit eine Hochtemperaturkorrosion durch HCl oder HF vermieden. Das Abgas aus der restlichen thermischen Behandlungszone wird in dem Economizer auf etwa 200 bis 300°C abgekühlt. Das erhitzte Wasser aus dem Economizer wird vorzugsweise als Speisewasser für den Abhitzekessel verwendet.

Eine Ausgestaltung besteht darin, daß das gesamte Gas aus dem ersten Teil der thermischen Behandlungszone nach der Nachverbrennung in die thermische Behandlungszone zurückgeleitet wird. Die Rückleitung kann über die gesamte Länge der thermischen Behandlungszone verteilt erfolgen. Das Abgas aus dem restlichen Teil der thermischen Behandlungszone, welches das gesamte abzuführende Abgas darstellt, wird in den Economizer geleitet. Diese Arbeitsweise ergibt eine sehr große Einsparung an Heizmaterial, es kann jedoch kein Dampf oder nur Niederdruckdampf und sonst nur heißes Wasser erzeugt werden.

Eine vorzugsweise Ausgestaltung besteht darin, daß das abgekühlte Abgas zur Entschwefelung in einer Venturi-Wirbelschicht durch Quenchwasser auf etwa 70 bis 80°C abgekühlt wird, feinkörniges Kalziumhydroxid eingeblasen wird und das Gas anschließend in einer Entstaubungsanlage weitgehend von Staub befreit wird. Die vereinigten Abgasströme werden durch das Quenchen abgekühlt und gleichzeitig wird der Taupunkt auf ca. 60 bis 70°C angehoben. Durch das Einblasen von feinem Kalziumhydroxid werden die sauren Bestandteile des Gases, wie HCl, HF und $SO_2$, im hohen Grade eingebunden. In der Entstaubungsanlage, die als EGR oder Gewebefilter ausgebildet sein kann, werden dann der abgebundene Kalk, der überschüssige freie Kalk und Staub abgeschieden.

Eine vorzugsweise Ausgestaltung besteht darin, daß die Entstaubungsanlage als EGR ausgebildet ist und abgeschiedener Staub aus der EGR in die Venturi-Wirbelschicht rezirkuliert wird. Wenn Staub aus dem gasseitig ersten Teil der EGR rezirkuliert wird, enthält er einen großen Anteil an freiem Kalk. Durch diese Rückführung kann der Verbrauch an Kalk und der Anfall an zu deponierenden Feststoffen wesentlich gesenkt werden.

Eine Ausgestaltung besteht darin, daß das entstaubte Abgas zur Entfernung von Quecksilberdampf über Aktivkohle geleitet wird.

Die Erfindung wird anhand eines Beispiels näher erläutert.

Ausführungsbeispiel:

Es wurden Brennversuche auf einer Pellet-Brennpfanne durchgeführt und die Ergebnisse auf eine endlose Pellet-Brennmaschine umgerechnet.

Der Hafenschlick hatte im Anlieferungszustand folgende chemische Zusammensetzung, bezogen auf trockene Substanz in %:

| | |
|---|---|
| Glühverlust (1050°C) | 19,3 |
| C-gesamt | 7,4 |
| $CO_2$–C | 0,9 |
| S-gesamt | 0,88 |
| Cl-gesamt | 0,05 |
| F-gesamt | 0,054 |
| Fe-gesamt | 5,3 |
| $SiO_2$ | 54,6 |
| $Al_2O_3$ | 8,7 |
| CaO | 4,7 |
| MgO | 1,3 |
| $TiO_2$ | 0,62 |
| BaO | 0,06 |
| K | 1,5 |
| P | 0,57 |
| Mn | 0,34 |
| V | 0,05 |
| Cr | 0,0169 |
| Ni | 0,0061 |
| Pb | 0,0131 |
| Zn | 0,0839 |
| Cu | 0,0157 |
| Cd | 0,00043 |
| As | 0,00519 |
| Hg | 0,00084 |

Der Trocknungsverlust bei 105°C betrug 66,9 %, bezogen auf feuchte Substanz.
26 t/h Schlick mit 13,5 t/h Wasser wurden mit 25 t/h Rückgut gemischt und pelletiert.
Die Grünpellets hatten folgende chemische Zusammensetzung, bezogen auf trockene Substanz in %:

| | |
|---|---|
| Glühverlust (1050°C) | 5,8 |
| C-gesamt | 2,3 |
| $CO_2$-C | 0,35 |
| S-gesamt | 0,33 |
| Fe-gesamt | 7,2 |
| $SiO_2$ | 59,3 |
| $Al_2O_3$ | 10,5 |
| CaO | 6,0 |
| MgO | 1,8 |
| $TiO_2$ | 0,85 |
| BaO | 0,09 |
| K | 1,6 |
| P | 0,72 |
| Mn | 0,37 |
| V | 0,05 |
| Cr | 0,05 |
| Ni | 0,05 |
| Pb | 0,05 |
| Zn | 0,12 |
| Cu | 0,07 |
| Sn | 0,05 |
| Ce | 0,05 |

Die Pellets wurden auf das Obertrum der Pellet-Brennmaschine in einer Menge von 51 t/h und mit einer Schichthöhe von 30 cm aufgegeben. In der Trocknungs- und Oxidationszone wurden heiße Gase von 500 bis 900°C durch das Bett gesaugt, in der Aufheiz- und Brennzone Gase von 900 bis 1150°C und in der Kalzinierzone Gase von 1150°C. Anschließend an die thermische Behandlungszone wurden die Pellets in einer zweistufigen Kühlzone durch Luft gekühlt, die von unten nach oben durch das Bett gedrückt wurde.

Die gekühlten Pellets wurden nach dem Abwurf von der Brennmaschine in 10,1 t/h Produktpellets und 25 t/h Rückgut getrennt. Die Produktpellets hatten folgende Zusammensetzung:

| | |
|---|---|
| C-gesamt | 0,02 |
| S-gesamt | 0,09 |
| Fe-gesamt | 7,2 |
| $SiO_2$ | 64,1 |
| $Al_2O_3$ | 11,4 |
| CaO | 6,2 |
| MgO | 2,0 |
| $TiO_2$ | 0,86 |
| BaO | 0,10 |
| K | 1,8 |
| P | 0,76 |
| Mn | 0,40 |
| V | 0,05 |
| Cr | 0,03270 |
| Ni | 0,01224 |
| Pb | 0,02239 |
| Zn | 0,11773 |
| Cu | 0,03346 |
| Sn | 0,05 |
| Ce | 0,05 |
| Cd | 0,00057 |
| As | 0,00461 |
| Hg | 0,000016 |
| $Cl^-$ (wasserlöslich) | 0,00058 |
| $F^-$ (wasserlöslich) | 0,00065 |
| $SO_4^{2-}$ (wasserlöslich) | 0,10224 |

Die erwärmte Kühlluft aus der ersten Kühlstufe wird mit etwa 675°C in die thermische Behandlungszone geleitet. Die erwärmte Kühlluft aus der zweiten Kühlzone wird mit etwa 300°C dem Abgas aus der Trocknungszone beigemischt. Die Abgase aus den Windkästen unter den ersten 78 % der thermischen Behandlungszone werden separat abgezogen und in die Nachverbrennung geleitet, wo sie unter Zusatz von Heizöl und Luft nachverbrannt werden. Anschließend werden die Rauchgase in einem Abhitzekessel auf 250°C abgekühlt. Das Abgas aus den restlichen 22 % der thermischen Behandlungszone wird in einem Economizer von 600°C auf 250°C abgekühlt und dann mit den Rauchgasen aus der Nachverbrennung vereinigt. Das vereinigte Gas wird zur Entschwefelung in eine Wirbelschicht geleitet, in die 432 kg/h $Ca(OH)_2$ und 10 t/h Quenchwasser eingedüst werden. Das Gas wird mit 80°C in eine EGR geleitet. Der abgeschiedene Feststoff aus dem ersten Teil der EGR wird in die Wirbelschicht rezirkuliert. Der abgeschiedene Feststoff aus dem letzten Teil der EGR wird abgeführt. Das Gas aus der EGR wird in einem Kühler auf 40°C abgekühlt und dabei wird Wasser auskondensiert. Anschließend erfolgt eine Aufheizung auf 50°C und Einleitung in Aktivkohleabsorber, wo Quecksilberdampf entfernt wird.

Die Gaszusammensetzungen werden in der Tabelle wie folgt angegeben (bezogen auf feuchte Gase):

Gasstrom I : Abgas aus dem ersten Teil der thermischen Behandlungszone vor der Nachverbrennung
Gasstrom II : Abgas aus dem restlichen Teil der thermischen Behandlungszone nach dem Economizer
Gasstrom III: Rauchgas aus der Nachverbrennung
Gasstrom IV : Gasstrom vor dem Eintritt in die Entschwefelung
Gasstrom V : Gasstrom nach Entschwefelung und EGR
Gasstrom VI : Gasstrom nach Quecksilberdampfentfernung

| Gasstrom | I | II | III | IV | V | VI |
|---|---|---|---|---|---|---|
| HG mg/Nm$^3$ | 1,5 | 0,89 | 1,47 | 1,38 | 1,23 | 0,01 |
| HF mg/Nm$^3$ | 113 | 134 | 114 | 118 | 3,4 | 4,6 |
| HCl mg/Nm$^3$ | 150 | 89 | 152 | 138 | 7 | 9,3 |
| SO$_2$ mg/Nm$^3$ | 635 | 2058 | 2151 | 2140 | 134 | 186 |
| org. C mg/Nm$^3$ | 562 | 65 | 7 | 17 | 15 | 20 |
| CO mg/Nm$^3$ | 2406 | 151 | 71 . | 105 | 94 | 130 |
| N$_2$ Vol.-% | 57,6 | 68,8 | 56,2 | 59,3 | 52,8 | 73,4 |
| CO$_2$ Vol.-% | 4,0 | 2,9 | 9,9 | 8,0 | 7,1 | 9,8 |
| O$_2$ Vol.-% | 13,4 | 17,5 | 4,6 | 7,6 | 6,7 | 9,3 |
| H$_2$O Vol.-% | 24,8 | 10,7 | 29,2 | 25,1 | 33,2 | 7,2 |
| °C | 160 | 250 | 250 | 250 | 80 | 50 |
| Nm$^3$/h | 77160 | 23040 | 78737 | 101777 | 114227 | 82184 |

Im Economizer werden 47,5 t/h Speisewasser von 110°C auf 150°C aufgeheizt, die dann anschließend in den Abhitzekessel geleitet werden, wo 46 t/h Dampf von 20 bar und 210°C erzeugt werden.

Die Vorteile der Erfindung bestehen darin, daß nur ein begrenzter Teil des Abgases durch die Nachverbrennung geleitet werden muß und trotzdem eine weitgehende Verbrennung von Kohlenwasserstoffen und CO erzielt wird. Weiterhin erfolgt eine sehr gute Energieausnutzung der Abgase ohne Korrosionsprobleme an Wärmeaustauschern.

**Patentansprüche**

1. Verfahren zur Herstellung von festen Agglomeraten aus stichfesten mineralischen Schlämmen, die organische Bestandteile bis zu 10 % enthalten, wobei aus den Schlämmen Formlinge hergestellt werden, die Formlinge auf einem Wanderrost in einer thermischen Behandlungszone durch Hindurchleiten von heißen oxidierenden Gasen getrocknet und geklinkert werden, die geklinkerten Formlinge durch Hindurchleiten von kalten Gasen gekühlt werden, und das Abgas des Wanderrostes einer Reinigung unterworfen wird, dadurch gekennzeichnet, daß das Abgas aus den ersten 60 bis 85 % der thermischen Behandlungszone des Wanderrostes separat abgezogen und mindestens ein Teilstrom in einer Nachverbrennung bei Temperaturen von 1000 bis 1200°C nachverbrannt wird, der Wärmeinhalt der Gase aus der Nachverbrennung ausgenutzt wird, das Abgas aus den restlichen 40 bis 15 % der thermischen Behandlungszone separat abgezogen und in einen Economizer geleitet wird, und das abgekühlte Abgas durch eine Entschwefelung und Entstaubung geleitet wird.

2. Verfahren nach Anspruch 1, dadurch gekennzeichnet, daß das Abgas aus den ersten 70 bis 80 % der thermischen Behandlungszone und aus den restlichen 30 bis 20 % separat abgezogen wird.

3. Verfahren nach Anspruch 1 oder 2, dadurch gekennzeichnet, daß ein Teilstrom des Abgases aus dem ersten Teil der thermischen Behandlungszone vor der Nachverbrennung in die thermische Behandlungszone zurückgeleitet wird.

4. Verfahren nach einem der Ansprüche 1 bis 3, dadurch gekennzeichnet, daß ein Teilstrom des Gases nach der Nachverbrennung in die thermische Behandlungszone zurückgeleitet wird.

5. Verfahren nach einem der Ansprüche 1 bis 4, dadurch gekennzeichnet, daß ein Teilstrom des Gases aus dem ersten Teil der thermischen Behandlungszone vor der Nachverbrennung in eine erste Kühlzone auf dem Wanderrost und anschließend in die thermische Behandlungszone geleitet wird.

6. Verfahren nach einem der Ansprüche 1 bis 5, dadurch gekennzeichnet, daß mindestens ein Teilstrom des Gases aus der Nachverbrennung in einen Abhitzekessel geleitet wird und nach dem Abhitzekessel, mit dem Gas aus dem Economizer vereinigt, durch die Entschwefelung und Entstaubung geleitet wird.

7. Verfahren nach Anspruch 1 oder 2, dadurch gekennzeichnet, daß das gesamte Gas aus dem ersten Teil der thermischen Behandlungszone nach der Nachverbrennung in die thermische Behandlungszone zurückgeleitet wird.

8. Verfahren nach einem der Ansprüche 1 bis 7, dadurch gekennzeichnet, daß das abgekühlte Abgas zur Entschwefelung in einer Venturi-Wirbelschicht durch Quenchwasser auf etwa 70 bis 80°C abgekühlt wird, feinkörniges Kalziumhydroxid eingeblasen wird, und das Gas anschließend in einer Entstaubungsanlage weitgehend von Staub befreit wird.

9. Verfahren nach Anspruch 8, dadurch gekennzeichnet, daß die Entstaubungsanlage als EGR ausgebildet ist und abgeschiedener Staub aus der EGR in die Venturi-Wirbelschicht rezirkuliert wird.

10. Verfahren nach einem der Ansprüche 1 bis 9, dadurch gekennzeichnet, daß das entstaubte Abgas zur Entfernung von Quecksilberdampf über Aktivkohle geleitet wird.

## Claims

1. Process for producing solid agglomerates from compact mineral sludges which contain organic constituents of up to 10%, the sludges being formed into formed bodies, the formed bodies being dried and clinkered on a travelling grate in a heat treatment zone by passing hot oxidising gases through, the clinkered formed bodies being cooled by passing cold gases through, and the waste gas from the travelling grate being subjected to cleansing, characterised in that the waste gas from the first 60 to 85% of the heat treatment zone of the travelling grate is drawn off separately and at least a partial flow is subsequently burned in an after-burning zone at temperatures of 1000 to 1200°C, the heat content of the gases from the after-burning zone is utilised, the waste gas from the remaining 40 to 15% of the heat treatment zone is drawn off separately and passed into an economiser, and the cooled waste gas is passed through a desulphurisation and dust collection zone.

2. Process according to claim 1, characterised in that the waste gas from the first 70 to 80% of the heat treatment zone and the waste gas from the remaining 30 to 20% are drawn off separately.

3. Process according to claim 1 or 2, characterised in that a partial flow of the waste gas from the first section of the heat treatment zone is recycled into the heat treatment zone before the after-burning zone.

4. Process according to one of claims 1 to 3, characterised in that a partial flow of the gas is recycled into the heat treatment zone after the after-burning zone.

5. Process according to one of claims 1 to 4, characterised in that a partial flow of the gas from the first section of the heat treatment zone is passed into a first cooling zone on the travelling grate before the after-burning zone and is then passed into the heat treatment zone.

6. Process according to one of claims 1 to 5, characterised in that at least a partial flow of the gas from the after-burning zone is passed into a waste heat boiler and after the waste heat boiler, united with the gas from the economiser, it is passed trough the desulphurisation and dust collection zones.

7. Process according to claim 1 or 2, characterised in that all the gas from the first section of the heat treatment zone is recycled into the heat treatment zone after the after-burning zone.

8. Process according to one of claims 1 to 7, characterised in that the cooled waste gas is cooled to about 70 to 80°C by quenching water in a venturi fluidised bed  for desulphurisation, fine-grained calcium hydroxide is blown in, and the gas is then largely freed of dust in a dust collection unit.

9. Process according to claim 8, characterised in that the dust collection unit is constructed as an electrostatic gas purification plant and dust which has been separated out from the electrostatic gas purification plant is recycled into the venturi fluidised bed.

10. Process according to one of claims 1 to 9, characterised in that the waste gas from which dust has been collected is passed over activated carbon in order to remove mercury vapour.

## Revendications

1. Procédé de préparation d'agglomérés solides, à partir de boues minérales consistantes qui contiennent jusqu'à 10% de constituants organiques, qui consiste à préparer des ébauches à partir des boues, à sécher et à clinkériser les ébauches sur une grille mobile dans une zone de traitement thermique par passage de gaz oxydants chauds, à refroidir les ébauches clinkérisées par passage de gaz froids, et à soumettre l'effluent gazeux de la grille mobile à une épuration, caractérisé en ce qu'il consiste à soutirer séparément l'effluent gazeux des premiers 60 à 85% de la zone de traitement thermique de la grille mobile et à faire subir au moins à un courant partiel une post-combustion à des températures de 1000 à 1200°C, à utiliser la teneur calorifique des gaz provenant de la post-combustion, à soutirer séparément l'effluent gazeux des 40 à 15% restants de la zone de traitement thermique, et à l'envoyer dans un économiseur, et à envoyer l'effluent gazeux refroidi à une désulfuration et à un dépoussiérage.

2. Procédé suivant la revendication 1, caractérisé en ce qu'il consiste à soutirer l'effluent gazeux séparément des premiers 70 à 80% de la zone de traitement thermique et des 30 à 20% restants.

3. Procédé suivant la revendication 1 ou 2 caractérisé en ce qu'il consiste à retourner un courant partiel de l'effluent gazeux provenant de la première partie de la zone de traitement thermique, en amont de la post-combustion, à la zone de traitement thermique.

4. Procédé suivant l'une des revendications 1 à 3 caractérisé en ce qu'il consiste à retourner un courant partiel du gaz, en aval de la post-combustion, à la zone de traitement thermique.

5. Procédé suivant l'une des revendications 1 à 4, caractérisé en ce qu'il consiste à envoyer un courant partiel du gaz provenant de la première partie de la zone de traitement thermique, en amont de la zone de post-combustion, à une première zone de refroidissement sur la grille mobile et, ensuite, à la zone de traitement thermique.

6. Procédé suivant l'une des revendications 1 à 5, caractérisé en ce qu'il consiste à envoyer au moins un courant partiel du gaz, provenant de la post-combustion, à une chaudière de récupération et à l'envoyer en aval de la chaudière de récupération avec le gaz épuré sortant de l'économiseur, à la désulfuration et au dépoussiérage.

7. Procédé suivant la revendication 1 ou 2, caractérisé en ce qu'il consiste à retourner tout le gaz de la première partie de la zone de traitement thermique, en aval de la post-combustion, à la zone de traitement thermique.

8. Procédé suivant l'une des revendications 1 à 7, caractérisé en ce qu'il consiste à refroidir jusqu'à 70 à 80°C environ l'effluent gazeux refroidi destiné à la désulfuration, dans un lit fluidisé à venturi, par de l'eau de refroidissement, à insuffler de l'hydroxyde de calcium en grains fins et, ensuite, à débarrasser le gaz, dans une grande mesure, de la poussière dans une installation de dépoussiérage.

9. Procédé suivant la revendication 8, caractérisé en ce qu'il consiste à constituer l'installation de dépoussiérage, sous la forme d'un dépoussiéreur électrostatique et à recirculer la poussière séparée du dépoussiéreur électrostatique au lit fluidisé à venturi.

10. Procédé suivant l'une des revendications 1 à 9, caractérisé en ce qu'il consiste à envoyer l'effluent gazeux dépoussiéré, pour en éliminer la vapeur de mercure, sur du charbon actif.